# EUROPÄISCHE PATENTSCHRIFT

(11) **EP 1 255 657 B1**
(45) Veröffentlichungstag und Bekanntmachung des Hinweises auf die Patenterteilung: **16.07.2003**
(21) Anmeldenummer: 01907536.5
(22) Anmeldetag: 15.02.2001
(51) Int. Cl.: B60K 15/035

(54) **VERFAHREN ZUR TRENNUNG VON KRAFTSTOFFDAMPF-LUFT-GEMISCHEN UND VORRICHTUNG ZUR DURCHFÜHRUNG DIESES VERFAHRENS**
METHOD FOR SEPARATING FUEL VAPOUR-AIR MIXTURES AND DEVICE FOR CARRYING OUT SAID METHOD
PROCEDE POUR DECOMPOSER DES MELANGES AIR-VAPEUR DE CARBURANT ET DISPOSITIF POUR METTRE EN OEUVRE LEDIT PROCEDE

(30) Priorität: 18.02.2000 DE 10007522
(43) Veröffentlichungstag der Anmeldung: 13.11.2002
(73) Patentinhaber: SIEMENS AKTIENGESELLSCHAFT, 80333 München (DE)
(72) Erfinder: MEYER, Knut, 45239 Essen (DE); FUEHLING, Stefan, 44269 Dortmund (DE); NOCKEMANN, Martin, 44129 Dortmund (DE)
(86) Internationale Anmeldenummer: EP0101645
(87) Internationale Veröffentlichungsnummer: WO01060648

(56) Entgegenhaltungen:
- EP-A- 0 936 097
- FR-A- 2 724 603
- FR-A- 2 728 200
- US-A- 4 671 071
- US-A- 4 829 968
- PATENT ABSTRACTS OF JAPAN vol. 1999, no. 09, 30. Juli 1999 (1999-07-30) & JP 11 093784 A (NOK CORP), 6. April 1999 (1999-04-06)

## Beschreibung

Gegenstand der vorliegenden Erfindung sind ein Verfahren zur Trennung von Kraftstoffdampf-Luft-Gemischen in seine Komponenten und eine Vorrichtung zur Durchführung dieses Verfahrens. Das Verfahren eignet sich insbesondere für die Reinigung von Dampfgemischen, wie sie in Kraftstoffbehältern von Kraftfahrzeugen entstehen.

Es ist bekannt, dass Kraftstoffe in Abhängigkeit von ihrem thermodynamischen Zustand zum Ausgasen neigen. Die dabei in Kraftstoffbehältern anfallenden Kraftstoffdampf-Luft-Gemische - nachfolgend Gase genannt - müssen zur Vermeidung eines zu hohen Behälterinnendrucks abgeführt werden. Insbesondere bei Kraftstoffbehältern in Kraftfahrzeugen gibt es die verschiedensten Vorrichtungen, um die während des Betriebs und während des Betankens anfallenden Gase aus dem Kraftstoffbehälter abzuführen. Aufgrund der bestehenden Gesetzgebungen, insbesondere in den USA, darf bei der Einleitung dieser Gase in die Atmosphäre nur ein bestimmter Anteil an Kohlenwasserstoffen in diesen Gasen enthalten sein. Diese Gase werden über Leitungen und Zusatzbehälter einem Aktivkohlefilter zugeführt, in dem aus den Gasen die Kohlenwasserstoffe herausgefiltert werden. Die gereinigten Gase werden anschließend in die Atmosphäre geleitet. Infolge der bereits geringen zulässigen Werte für die Gesamt-Fahrzeug-Emission von Kohlenwasserstoffen besitzen heutige Aktivkohlefilter bereits eine beachtliche Baugröße mit allen damit verbundenen Nachteilen. Im Hinblick auf den Umwelttrend zu immer niedrigeren Emissions--grenzwerten in den USA und Europa ist das Volumen heutiger Aktivkohlefilter auf Dauer nicht ausreichend.

Aus der JP 11093784 A und der US 4,671,071 die der Oberbegriff der Anspruche 1 und 11 zeigen, ist es bekannt, in einer Leitung zwischen dem Kraftstoffbehälter einen Kondensator anzuordnen, durch welchen aus dem Kraftstoffbehälter abgesaugte Gase hindurchgeführt werden. Der Kondensator ist mit gekühltem Kraftstoff gefüllt, Die FR-A-2 724 603 zeigt einen Kraftstoffbehälter, an dem mehrere Leitungen zum Absaugen und Zuführen von Gasen aus dem Kraftstoffbehälter angeschlossen sind. In den Leitungen sind ein Kompressor und ein Kondensator angeordnet. Hierdurch wird das Kraftstoffdampf-Luft-Gemisch aus dem Kraftstoffbehälter einem Vorabscheider zugeführt, in dem eine erste Trennung von Kraftstoffbestandteilen und Luft durchgeführt wird, so dass dem Filter ein Gas zugeführt wird, das wesentlich geringere Konzentrationen an Kohlenwasserstoffen aufweist als das bei herkömmlichen Entlüftungavorrichtungen der Fall ist. Die bis dahin in dem Gas noch vorhandenen Bestandteile an Kohlenwasserstoffen werden anschließend im Filter zurückgehalten, so dass das an die Atmosphäre abgegebene Gas im wesentlichen frei von Kohlenwasserstoffen ist.

Der Erfindung liegt daher die Aufgabe zugrunde, ein Verfahren zur Reinigung von Kraftstoffdampf-Luft-Gemischen, sowie eine Vorrichtung zur Durchführung des Verfahrens zu schaffen, mit denen aufwendige und großbauende Filter vermieden werden.

Gelöst wird die Aufgabe mit den Merkmalen der Ansprüche 1 und 11. Vorteilhafte Ausgestaltungen sind in den Unteransprüchen beschrieben.

Mit dem erfindungsgemäßen Verfahren und der Vorrichtung wird das Kraftstoffdampf-Luft-Gemisch aus dem Kraftstoffbehälter einem Vorabscheider zugeführt, in dem eine erste Trennung von Kraftstoffbestandteilen und Luft durchgeführt wird, so dass dem Filter ein Gas zugeführt wird, das wesentlich geringere Konzentrationen an Kohlenwasserstoffen aufweist als das bei herkömmlichen Entlüftungsvorrichtungen der Fall ist. Die bis dahin in dem Gas noch vorhandenen Bestandteile an Kohlenwasserstoffen werden anschließend im Filter zurückgehalten, so dass die an die Atmosphäre abgegebene Gas im wesentlichen frei von Kohlenwasserstoffen ist. Der entscheidende Vorteil besteht neben den spürbar verringerten Emissionswerten darin, dass anstatt des bisher großvolumigen und schweren Aktivkohlefilter ein erheblich kleinvolumiger und damit leichterer Filter Verwendung finden kann. Erreicht wird die Trennung der Kraftstoffbestandteile nicht wie bisher durch Adsorption, sondern durch physikalische Abscheidung, indem die Kohlenwasserstoffe im Vorabscheider kondensieren. Weiterhin reduziert sich der aus dem Tanksystem auszuschleusende Gasmassenstrom um den abgeschiedenen Dampfmassenstrom, so dass der Tankinnendruck und somit die Leitungsquerschnitte reduziert werden, was die Betankbarkeit verbessert.

In einer ersten vorteilhaften Ausgestaltung des erfindungsgemäßen Verfahrens werden die anfallenden Gase zuerst komprimiert und anschließend einem Kondensator zugeführt, an dessen Kondensationsflächen die Kohlenwasserstoffe durch Kondensation in die flüssige Phase übergehen. Die Kondensationsflächen des Kondensator können hierzu über einen eigenen Kühlkreislauf betrieben werden. Ein eigener Kühlkreislauf ist nicht erforderlich, wenn die Kondensationsflächen des Kondensators mit der Klimaanlage verbunden sind. Es ist aber auch die Verwendung von Halbleiter-Kühlelementen denkbar.

Über eine Verbindung zwischen dem Kondensator und dem Kraftstoffbehälter wird die flüssige Phase in den Behälter zurückgeführt, so dass die abgeschiedenen Kraftstoffbestandteile zur Verbrennungsmaschine gefördert werden können. Da Kompressoren und Kondensatoren relativ einfach gebaute Elemente sind, liegen bei deren Verwendung die Kosten für die Vorrichtung nicht wesentlich höher als bei heutigen Kohlenwasserstoff-Rückhaltesystemen.

In einer vorteilhaften Ausgestaltung sind der den Vorabscheider bildende Kompressor und Kondensator zu einer Baueinheit zusammengefasst. Das komprimierte Gasgemisch hat damit nur einen kurzen Weg bis zum Kondensator, wodurch Druckverluste erheblich reduziert und der Kompressor relativ klein ausgeführt werden kann. Des weiteren hat sich als vorteilhaft erwiesen, am Ausgang des Kondensators eine Gas-Trennmembran anzuordnen. Mit dieser zusätzlichen Gas-Trennmembran wird der Kohlenwasserstoffanteil weiter verringert.

Besonders vorteilhaft ist es, das Gasgemisch vor der Zuführung zum Filter zu expandieren. Zu diesem Zweck ist der Vorabscheider um eine Düse oder ein Ventil als Drossel und ein Zyklon erweitert. Das infolge der Expansion beschleunigte Gas strömt in das Zyklon, in dem eine Nachkondensation stattfindet. Durch die Fliehkraftwirkung wird Kondensat abgeschieden und über eine Verbindung wieder in den Kraftstoffbehälter zurückgeführt. Das nochmals gereinigte Gas besitzt einen Reinheitsgrad, der eine weitere Reduzierung eines nachgeschalteten Aktivkohlefilters oder möglicherweise durch einen Katalytbrenners ermöglicht. Unter Umständen kann damit sogar ganz auf einen Aktivkohlefilter verzichtet werden und stattdessen eine Gastrennmembran angeordnet werden, bevor das Gas in die Atmosphäre eingeleitet wird.

Zur weiteren Senkung der Emissionswerte ist es vorteilhaft, den Vorabscheider in den Kraftstoffbehälter zu integrieren. Da somit auch alle Verbindungsstellen der erfindungsgemäßen Vorrichtung im Kraftstoffbehälter angeordnet sind, müssen diese Stellen verstärkter Permeation bei der Konstruktion nicht weiter berücksichtigt werden, was eine zusätzliche Vereinfachung ist und damit zu einer weiteren Kostensenkung führt. Darüber hinaus entfallen infolge der kompakten Gestaltung des Vorabscheiders lange Schlauchverbindungen.

In einer zweiten Ausführungsform des erfindungsgemäßen Verfahrens kondensiert das während des Betriebs oder des Betankens anfallende Gas ohne vorherige Kompression in einem Mischkondensator. Dazu wird das Gemisch in einen Behälter geleitet, der mit einem flüssigen Kühlmedium gefüllt ist. Als Kühlmedium kann vorzugsweise Kraftstoff verwendet werden. Beim Kontakt mit der kühlen Flüssigkeit kondensieren die Kohlenwasserstoffe, während das gereinigte Gas über einen Auslass im oberen Teil des Mischkondensators einem Filter zugeführt wird. Die auskondensierten Bestandteile werden anschließend dem Kraftstoffbehälter wieder zugeführt.

Zur Erhöhung der Kondensationsrate ist es vorteilhaft, das Kühlmedium zu kühlen. Eine Möglichkeit ist die Kühlung der Wandungen des Kondensators. Des weiteren lassen sich Halbleiter-Kühlelemente im Kondensator anordnen. In einer weiteren Ausgestaltung ist der Kondensator an einen Kühlkreislauf angeschlossen. Zum einen wird aus dem Mischkondensator abfließende Flüssigkeit einem Kühler zugeführt, bevor sie mit einer deutlich niedrigeren Temperatur dem Mischkondensator wieder zugeführt wird. Zum anderen können im Mischkondensator Kühlrohre angeordnet sein, die von einer Kühlflüssigkeit durchströmt werden. Dieser Kühler kann ein separater Kühler sein, der über die Klimaanlage des Fahrzeugs betrieben wird.

An mehreren Ausführungsbeispielen wird die Erfindung näher erläutert. Dabei zeigen:
- Figur 1:: eine schematische Darstellung der erfindungsgemäßen Vorrichtung,
- Figur 2:: einen Vorabscheider mit Kompressions- und Kondensationsstufe,
- Figur 3:: einen Vorabscheider mit Mischkondensator.

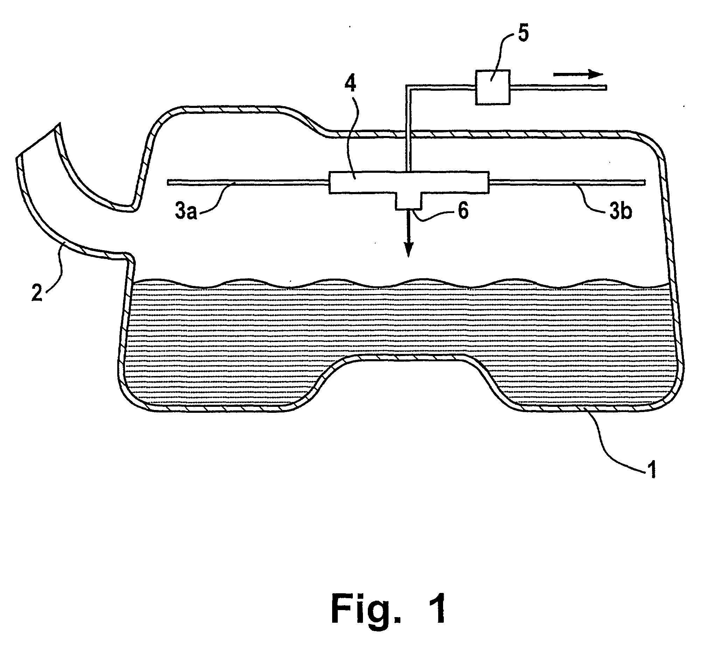

Der in Figur 1 dargestellte Kraftstoffbehälter 1 eines Kraftfahrzeugs ist über einen Einfüllstutzen 2 befüllbar. Für die Entlüftung während des Betankens und des Betriebs sind Entlüftungsleitungen 3a, 3b im oberen Bereich des Kraftstoffbehälters 1 angeordnet. Diese Entlüftungsleitungen münden in den Ausgleichsbehälter mit innenliegendem Vorabschelder 4. Das über die Entlüftungsleitungen 3a, 3b gesammelte Gas wird dem Vorabscheider 4 zugeführt, wobei die in dem Gas enthaltenen Kohlenwasserstoffe kondensieren. Das gereinigte Gas wird anschließend einem Aktivkohlefilter 5 zugeführt, bevor es nach einer zweiten Reinigung in einem kleinen Aktivkohlefilter an die Atmosphäre geführt wird. Die im Vorabscheider 4 auskondensierten Kohlenwasserstoffe werden über einen Auslass 6 dem Kraftstoffbehälter wieder zugeführt.

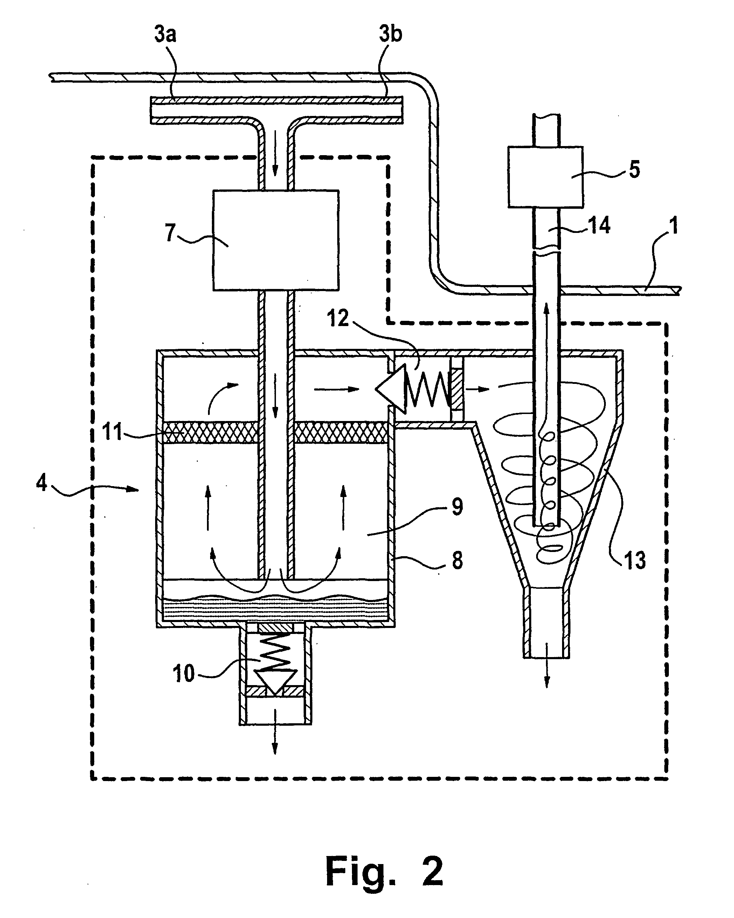

Der Vorabscheider 4 in Figur 2 besitzt eine Kompressionsstufe 7, in der das über die Entlüftungsleitungen 3a, 3b zugeführte Gas verdichtet und erwärmt wird. Anschließend strömt das komprimierte Gas in einen Kondensator 8. An dessen Kondensationsflächen 9 kondensieren die im Gasgemisch enthaltenen Kohlenwasserstoffe. Die flüssige Phase sammelt sich am Boden des Kondensators 8 und wird über ein Ventil 10 in den Kraftstoffbehälter 1 geleitet. Über eine Membran 11, an der weitere Kohlenwasserstoffe abgeschieden werden, wird das Gas mittels einer Düse 12 expandiert. Im nunmehr beschleunigten Gasstrom befinden sich Flüssigkeitstropfen, die in ein Zyklon 13 eintreten. Aufgrund der Fliehkraft scheiden sich Kraftstofftropfen an der Wandung des Zyklons 13 ab. Während die flüssige Phase wieder in den Kraftstoffbehälter 1 geleitet wird, gelangt das nunmehr gereinigte Gasgemisch über die Verbindung 14 zum außerhalb des Kraftstoffbehälters 1 angeordneten Aktivkohlefilter 5.

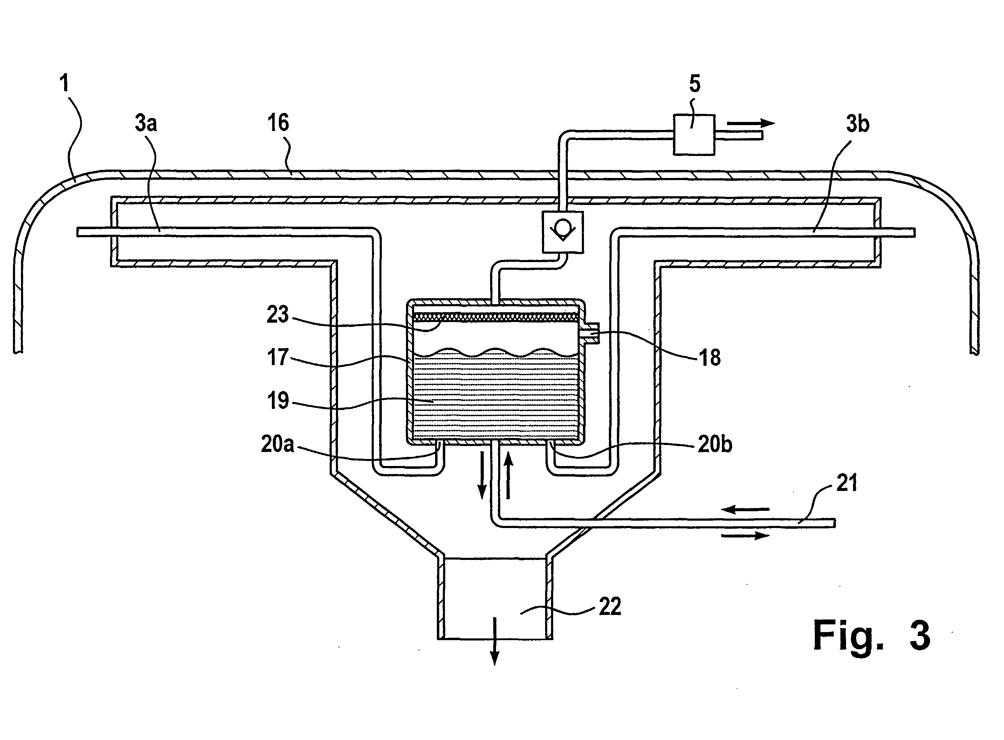

Die in Figur 3 dargestellte Vorrichtung zeigt einen Ausschnitt eines Kraftstoffbehälters 1 mit einem im oberen Bereich innenliegenden Ausperlbehälter 16. Die in den Ausperlbehälter 16 reichenden Entlüftungsleitungen 3a, 3b sind dort mit einem Mischkondensator 17 bis zur Unterkante einer Überlauföffnung 18 mit einem Kühlmedium 19 gefüllt. Die Zuführöffnungen 20a, 20b der Entlüftungsleitungen 3a, 3b sind im Bodenbereich des Mischkondensators 17 angeordnet. Über einen Kühlkreislauf 21 wird der Zustand konstanter Temperatur im Mischkondensator 17erreicht. Dazu wird mit konstanten Massenstrom Kühlmedium aus dem Mischkondensator 17 abgeführt und einem Wärmetauscher zugeführt. Anschließend wird das so herabgekühlte Kühlmedium wieder dem Mischkondensator 17 zugeführt.

Der in das Kühlmedium auskondensierte Kraftstoff 19 gelangt durch den Überlauf 18 am Mischkondensator 17 in den Ausperlbehälter 16. Die in dessen Bodenbereich angeordnete Pumpe 22 fördert den anfallenden Kraftstoff 19 in den Kraftstoffbehälter 1, die Fördereinheit oder die Pumpe zurück. Das restliche im oberen Bereich des Mischkondensators 17 sich noch ansammelnde Gasgemisch wird zum Aktivkohlefilter 5 geleitet, wobei ein Sieb 23 im Bereich des Mischkondensatoraustritts gewährleistet, dass keine flüssigen Bestandteile zum Aktivkohlefilter 5 gelangen können.

## Patentansprüche

1. Verfahren zur Trennung von Kraftstoffdampf-Luft-Gemischen eines Kraftstoffbehälters (1), vorzugsweise in Kraftfahrzeugen, bei dem das zu reinigende Gasgemisch aus dem Kraftstoffbehälter (1) einem Filter (5) zugeführt wird, wobei das zu reinigende Gasgemisch einem Vorabscheider (4) zugeführt wird und in dem Vorabscheider (4) Kohlenwasserstoffe aus dem Gasgemisch abgeschieden und dem Kraftstoffbehälter (1) wieder zugeführt werden und wobei das gereinigte Gas zum Filter (5) geleitet wird, **dadurch gekennzeichnet, dass** das Abscheiden der Kohlenwasserstoffe in dem Vorabscheider (4) im Inneren des Kraftstoffbehälters (1) erfolgt und dass das von dem Vorabscheider (4) gereinigte Gas dem Kraftstoffbehälter (1) entnommen wird.

2. Verfahren nach Anspruch 1, **dadurch gekennzeichnet, dass** das Gasgemisch aus dem Kraftstoffbehälter (1) über Entlüftungsleitungen (3a, 3b)dem Vorabscheider (4) zugeführt wird.

3. Verfahren nach Anspruch 1 und 2, **dadurch gekennzeichnet, dass** in dem Gasgemisch enthaltene Kohlenwasserstoffe in dem Vorabscheider (4) kondensiert werden.

4. Verfahren nach Anspruch 3, **dadurch gekennzeichnet, dass** das Gasgemisch in dem Vorabscheider (4) vor der Kondensation komprimiert wird.

5. Verfahren nach Anspruch 4, **dadurch gekennzeichnet, dass** das Gas nach der Kondensation expandiert wird.

6. Verfahren nach Anspruch 5, **dadurch gekennzeichnet, dass** das Gas in einem zweiten Schritt nachkondensiert wird.

7. Verfahren nach einem der Ansprüche 3 bis 6, **dadurch gekennzeichnet, dass** das Gas nach der Kondensation durch ein Filter, vorzugsweise eine Gastrennmembran, geleitet wird.

8. Verfahren nach einem der Ansprüche 6 oder 7, **dadurch gekennzeichnet, dass** die in der Nachkondensation abgeschiedenen flüssigen Kohlenwasserstoffe in den Kraftstoffbehälter (1) geleitet werden.

9. Verfahren nach einem der Ansprüche 3 bis 8, **dadurch gekennzeichnet, dass** das Gas zur Kondensation durch ein Kühlmedium, vorzugsweise Kraftstoff, geleitet wird.

10. Verfahren nach einem der Ansprüche 3 bis 9, **dadurch gekennzeichnet, dass** die Kondensationsflächen (9) und das Kühlmedium gekühlt werden.

11. Vorrichtung zur Durchführung des Verfahrens nach Anspruch 1 mit einem Kraftstoffbehälter (1), einem Filter (5), einem Vorabscheider (4) und einer Leitung von dem Vorabscheider (4) zum Filter, wobei im Kraftstoffbehälter (1) entstehende Gase dem Vorabscheider (4) zuführbar sind und der Vorabscheider (4) eine weitere Verbindung mit dem Kraftstoffbehälter (1) aufweist, **dadurch gekennzeichnet, dass** der Vorabscheider (4) im Inneren des Kraftstoffbehälters (1), vorzugsweise in dessen oberen Bereich, angeordnet ist.

12. Vorrichtung nach Anspruch 11, **dadurch gekennzeichnet, dass** der Vorabscheider (4) mit Entlüftungsleitungen (3a, 3b) des Kraftstoffbehälters (1) zur Zuführung des Gases verbunden ist.

13. Vorrichtung nach Anspruch 11 und 12, **dadurch gekennzeichnet, dass** der Vorabscheider (4) aus einer Kompressionsstufe (7) und einen Kondensationsflächen (9) aufweisenden Kondensator (8) gebildet ist.

14. Vorrichtung nach einem der Ansprüche 11 bis 13, **dadurch gekennzeichnet, dass** in Strömungsrichtung nach den Kondensationsflächen (9) ein Filter (11), vorzugsweise eine Gastrennmembran angeordnet ist.

15. Vorrichtung nach zumindest einem der Ansprüche 11 bis 14, **dadurch gekennzeichnet, dass** am strömungsseitigen Ausgang des Kondensators (8) eine Drossel (12) angeordnet ist.

16. Vorrichtung nach Anspruch 15, **dadurch gekennzeichnet, dass** die Drossel (12) ein Ventil oder eine Düse ist.

17. Vorrichtung nach zumindest einem der Ansprüche 11 bis 16, **dadurch gekennzeichnet, dass** nach dem Kondensator (8) ein weiterer Kondensator (13), vorzugsweise ein Zyklon angeordnet ist.

18. Vorrichtung nach zumindest einem der Ansprüche 11 bis 17, **dadurch gekennzeichnet, dass** der weitere Kondensator (13) eine Verbindung mit dem Kraftstoffbehälter (1) zum Ableiten flüssiger Kohlenwasserstoffe besitzt.

19. Vorrichtung nach den Ansprüchen 11 und 12, **dadurch gekennzeichnet, dass** der Vorabscheider (4) ein mit Kühlmedien (19), vorzugsweise Kraftstoff gefüllter Mischkondensator (17) ist.

20. Vorrichtung nach Anspruch 19, **dadurch gekennzeichnet, dass** die Entlüftungsleitungen (3a, 3b) im unteren Bereich des Mischkondensators (17) enden.

21. Vorrichtung nach zumindest einem der Ansprüche 19 und 20, **dadurch gekennzeichnet, dass** am Ausgang des Mischkondensators (17) zum Filter (5) ein Sieb (23) mit einer tropfenundurchlässigen Maschenweite angeordnet ist.

22. Vorrichtung nach zumindest einem der Ansprüche 19 bis 21, **dadurch gekennzeichnet, dass** der Mischkondensator (17) in einem Ausperlbehälter (16) angeordnet ist.

23. Vorrichtung nach Anspruch 22, **dadurch gekennzeichnet, dass** der Mischkondensator (17) einen Überlauf (18) in den Ausperlbehälter (16) besitzt.

24. Vorrichtung nach zumindest einem der Ansprüche 11 bis 23, **dadurch gekennzeichnet, dass** an den Kondensationsflächen (9), am Mischkondensator (17) oder in dem Kühlmedium (19) Halbleiter-Kühlelemente angeordnet sind.

25. Vorrichtung nach zumindest einem der Ansprüche 11 bis 23, **dadurch gekennzeichnet, dass** die Kondensationsflächen (9), der Mischkondensator (17) oder das Kühlmedium (19) mittels eines Kühlkreislaufes, vorzugsweise einer Klimaanlage kühlbar sind.

26. Vorrichtung nach zumindest einem der Ansprüche 11 bis 25, **dadurch gekennzeichnet, dass** das Filter (5) ein Aktivkohlefilter oder eine Gastrennmembran ist.

27. Vorrichtung nach zumindest einem der Ansprüche 11 bis 26, **dadurch gekennzeichnet, dass** in der weiteren Verbindung (6) ein Ventil (10) oder eine Pumpe (23), vorzugsweise eine Saugstrahlpumpe angeordnet ist.

## Claims

1. Method for the separation of fuel-vapour/air mixtures of a fuel tank (1), preferably in motor vehicles, in which the gas mixture to be purified is supplied from the fuel tank (1) to a filter (5), the gas mixture to be purified being supplied to a preseparator (4), and, in the preseparator (4), hydrocarbons being separated from the gas mixture and supplied to the fuel tank (1) again, and the purified gas being conducted to the filter (5), **characterized in that** the separation of the hydrocarbons takes place in the preseparator (4) inside the fuel tank (1), and **in that** gas purified by the preseparator (4) is removed from the fuel tank (1).

2. Method according to Claim 1, **characterized in that** the gas mixture is supplied from the fuel tank (1) to the preseparator (4) via venting lines (3a, 3b).

3. Method according to Claims 1 and 2, **characterized in that** hydrocarbons present in the gas mixture are condensed in the preseparator (4).

4. Method according to Claim 3, **characterized in that** the gas mixture in the preseparator (4) is compressed before condensation.

5. Method according to Claim 4, **characterized in that** the gas is expanded after condensation.

6. Method according to Claim 5, **characterized in that**, in a second step, the gas is postcondensed.

7. Method according to one of Claims 3 to 6, **characterized in that**, after condensation, the gas is conducted through a filter, preferably a gas separation diaphragm.

8. Method according to one of Claims 6 and 7, **characterized in that** the liquid hydrocarbons separated in postcondensation are conducted into the fuel tank (1).

9. Method according to Claims 3 to 8, **characterized in that** the gas for condensation is conducted through a cooling medium, preferably fuel.

10. Method according to Claims 3 to 9, **characterized in that** the condensation surfaces (9) and the cooling medium are cooled.

11. Device for carrying out the method according to Claim 1, with a fuel tank (1), a filter (5), a preseparator (4) and a line from the preseparator (4) to the filter, it being possible for gases occurring in the fuel tank (1) to be supplied to the preseparator (4), and the preseparator (4) having a further connection to the fuel tank (1), **characterized in that** the preseparator (4) is arranged inside the fuel tank (1), preferably in the upper region of the latter.

12. Device according to Claim 11, **characterized in that** the preseparator (4) is connected to venting lines (3a, 3b) of the fuel tank (1) for supplying the gas.

13. Device according to Claim 11 and 12, **characterized in that** the preseparator (4) is formed from a compression stage (7) and a condenser (8) having condensation surfaces (9).

14. Device according to one of Claims 11 to 13, **characterized in that** a filter (11), preferably a gas separation diaphragm, is arranged downstream of the condensation surfaces (9) in the direction of flow.

15. Device according to one of Claims 11 to 14, **characterized in that** a throttle (12) is arranged at the flow-side outlet of the condenser (8).

16. Device according to Claim 15, **characterized in that** the throttle (12) is a valve or a nozzle.

17. Device according to at least one of Claims 11 to 16, **characterized in that** a further condenser (13), preferably a cyclone, is arranged downstream of the condenser (8).

18. Device according to at least one of Claims 11 to 17, **characterized in that** the further condenser (13) has a connection to the fuel tank (1) for the discharge of liquid hydrocarbons.

19. Device according to Claims 11 and 12, **characterized in that** the preseparator (4) is a cocondenser (17) filled with cooling media (19), preferably fuel.

20. Device according to Claim 19, **characterized in that** the venting lines (3a, 3b) terminate in the lower region of the cocondensor (17).

21. Device according to at least one of Claims 19 and 20, **characterized in that** a screen (23) with a dropimpermeable mesh width is arranged at the outlet of the cocondenser (17) to the filter (5).

22. Device according to at least one of Claims 19 to 21, **characterized in that** the cocondenser (17) is arranged in a bubble tank (16).

23. Device according to Claim 22, **characterized in that** the cocondenser (17) possesses an overflow (18) into the bubble tank (16).

24. Device according to at least one of Claims 11 to 23, **characterized in that** semiconductor cooling elements are arranged on the condensation surfaces (9), on the cocondenser (17) or in the cooling medium (19).

25. Device according to at least one of Claims 11 to 23, **characterized in that** the condensation surfaces (9), the cocondenser (17) or the cooling medium (19) can be cooled by means of a cooling circuit, preferably of an air-conditioning system.

26. Device according to at least one of Claims 11 to 25, **characterized in that** the filter (5) is an activated-charcoal filter or a gas separation diaphragm.

27. Device according to at least one of Claims 11 to 26, **characterized in that** a valve (10) or a pump (23), preferably a suction jet pump, are arranged in the further connection (6).

## Revendications

1. Procédé permettant de séparer des mélanges de vapeur de carburant et d'air d'un réservoir de carburant (1), utilisé de préférence dans des véhicules automobiles, dans lequel le mélange gazeux du réservoir de carburant (1) qui doit être épuré est mené à un filtre (5), le mélange gazeux qui doit être épuré est mené à un séparateur primaire (4) et, dans le séparateur primaire (4), des hydrocarbures sont séparés du mélange gazeux et amenés de nouveau au réservoir de carburant (1), et le gaz épuré est conduit jusqu'au filtre (5), **caractérisé en ce que** la séparation des hydrocarbures est réalisée dans le séparateur primaire (4) situé à l'intérieur du réservoir de carburant (1), et **en ce que** le gaz épuré par le séparateur primaire (4) est prélevé du réservoir de carburant (1).

2. Procédé selon la revendication 1, **caractérisé en ce que** le mélange gazeux du réservoir de carburant (1) est amené au séparateur primaire (4) par des conduites de dégazage (3a, 3b).

3. Procédé selon les revendications 1 et 2, **caractérisé en ce que** des hydrocarbures contenus dans le mélange gazeux sont condensés dans le séparateur primaire (4).

4. Procédé selon la revendication 3, **caractérisé en ce que** le mélange gazeux est comprimé dans le séparateur primaire (4) avant la condensation.

5. Procédé selon la revendication 4, **caractérisé en ce que** le gaz est détendu après la condensation.

6. Procédé selon la revendication 5, **caractérisé en ce que**, dans une deuxième étape, le gaz est détendu une seconde fois.

7. Procédé selon l'une des revendications 3 à 6, **caractérisé en ce que** le gaz, après la condensation, est conduit à travers un filtre, de préférence une membrane de séparation des gaz.

8. Procédé selon l'une des revendications 6 ou 7, **caractérisé en ce que** les hydrocarbures liquides séparés lors de la deuxième condensation sont conduits dans le réservoir de carburant (1).

9. Procédé selon l'une des revendications 3 à 8, **caractérisé en ce que** le gaz est conduit, en vue de la condensation, à travers un fluide de refroidissement, de préférence du carburant.

10. Procédé selon l'une des revendications 3 à 9, **caractérisé en ce que** les surfaces de condensation (9) et le fluide de refroidissement sont refroidis.

11. Dispositif destiné à la réalisation du procédé selon la revendication 1 comportant un réservoir de carburant (1), un filtre (5), un séparateur primaire (4) et une conduite reliant le séparateur primaire (4) au filtre, des gaz se formant dans le réservoir de carburant (1) pouvant être amenés au séparateur primaire (4) et le séparateur primaire (4) présentant un autre raccord le reliant au réservoir de carburant (1), **caractérisé en ce que** le séparateur primaire (4) est disposé à l'intérieur du réservoir de carburant (1), de préférence dans la zone supérieure de celui-ci.

12. Dispositif selon la revendication 11, **caractérisé en ce que** le séparateur primaire (4) est relié à des conduites de dégazage (3a, 3b) du réservoir de carburant (1) afin de permettre l'amenée du gaz.

13. Dispositif selon les revendications 11 et 12, **caractérisé en ce que** le séparateur primaire (4) est formé d'un palier de compression (7) et d'un condenseur (8) présentant des surfaces de condensation (9).

14. Dispositif selon l'une des revendications 11 à 13, **caractérisé en ce qu'**un filtre (11), de préférence une membrane de séparation des gaz, est disposé en aval des surfaces de condensation (9).

15. Dispositif selon au moins l'une des revendications 11 à 14, **caractérisé en ce qu'**un restricteur (12) est disposé en aval de la sortie du condenseur (8).

16. Dispositif selon la revendication 15, **caractérisé en ce que** le restricteur (12) est une soupape ou une tuyère.

17. Dispositif selon au moins l'une des revendications 11 à 16, **caractérisé en ce qu'**un condenseur supplémentaire (13), de préférence un cyclone, est disposé après le condenseur (8).

18. Dispositif selon au moins l'une des revendications 11 à 17, **caractérisé en ce que** le condenseur supplémentaire (13) possède un raccord le reliant au réservoir de carburant (1) afin de permettre l'évacuation d'hydrocarbures liquides.

19. Dispositif selon les revendications 11 et 12, **caractérisé en ce que** le séparateur primaire (4) est un condenseur à mélange (17) rempli de fluides de refroidissement (19), de préférence de carburant.

20. Dispositif selon la revendication 19, **caractérisé en ce que** les conduites de dégazage (3a, 3b) se terminent dans la zone inférieure du condenseur à mélange (17).

21. Dispositif selon au moins l'une des revendications 19 et 20, **caractérisé en ce qu'**un tamis (23) comportant une ouverture de maille imperméable aux gouttes est disposé à la sortie du condenseur à mélange (17) menant au filtre (5).

22. Dispositif selon au moins l'une des revendications 19 à 21, **caractérisé en ce que** le condenseur à mélange (17) est disposé dans un réservoir de formation de gouttelettes (16).

23. Dispositif selon la revendication 22, **caractérisé en ce que** le condenseur à mélange (17) possède un trop-plein (18) donnant dans le réservoir de formation de gouttelettes (16).

24. Dispositif selon au moins l'une des revendications 11 à 23, **caractérisé en ce que** des éléments de refroidissement à semi-conducteurs sont disposés sur les surfaces de condensation (9), sur le condenseur à mélange (17) ou dans le fluide de refroidissement (19).

25. Dispositif selon au moins l'une des revendications 11 à 23, **caractérisé en ce que** les surfaces de condensation (9), le condenseur à mélange (17) ou le fluide de refroidissement (19) peuvent être refroidis au moyen d'un circuit de refroidissement, de préférence un système à air conditionné.

26. Dispositif selon au moins l'une des revendications 11 à 25, **caractérisé en ce que** le filtre (5) est un filtre à charbon actif ou une membrane de séparation des gaz.

27. Dispositif selon au moins l'une des revendications 11 à 26, **caractérisé en ce que** dans le raccordement supplémentaire (6) est disposée une soupape (10) ou une pompe (23), de préférence une pompe aspirante.
